# DEMANDE DE BREVET EUROPEEN

(11) **EP 0 735 362 A1**
(43) Date de publication de la demande: **02.10.1996**
(21) Numéro de dépôt: 96400647.2
(22) Date de dépôt: 27.03.1996
(51) Int. Cl.: G01N 27/30

(54) **Electrode pour dispositif de mesure de petits potentiels dans une solution aqueuse, embout servant à réaliser une telle électrode, et procédé d'obtention de cette électrode**

(30) Priorité: 31.03.1995 FR 9503814
(71) Demandeur: JEULIN S.A., 27000 Evreux (FR)
(72) Inventeur: Richard, Daniel, 31380 Gragnague (FR); Duchaussoir, Michel, 27000 Evreux (FR)
(74) Mandataire: Jaunez, Xavier

(57) **Abrégé**

L'invention concerne une électrode pour dispositif de mesure de petits potentiels dans une solution aqueuse, comportant une âme conductrice métallique (5) enveloppée d'une gaine tubulaire isolante (11) qui se prolonge, au-delà de l'extrémité de cette âme, sur une portion délimitant un espace intérieur rempli d'une pâte ou gélatine conductrice (13).

## Description

La présente invention concerne une électrode pour dispositif de mesure de petits potentiels dans une solution aqueuse, un embout servant à réaliser une telle électrode et un procédé d'obtention de cette électrode.

Lorsque l'on souhaite mesurer des petits potentiels électriques, notamment pour des manipulations en biologie dans le cadre d'une analyse transmembranaire, c'est-à-dire visant à mesurer la différence de potentiel entre les deux faces d'une membrane à tester, on utilise un dispositif de mesure comportant deux électrodes plongées dans un milieu aqueux de part et d'autre de la membrane. Ce genre de dispositif est particulièrement utilisé dans un but pédagogique et expérimental.

Toutefois, si l'on plonge une électrode classique dans une solution aqueuse, il se crée dans la zone de contact entre l'électrode et la solution un potentiel dit "de jonction". Ce potentiel, qui est dû au phénomène d'oxydoréduction, varie d'une électrode à l'autre, de sorte qu'entre les deux électrodes apparaît une différence de potentiel "de jonction" qui est le plus souvent très supérieure à la différence de potentiel que l'on souhaite mesurer. En effet, alors que les différences de potentiel mesurées dans le cadre d'une analyse transmembranaire sont de l'ordre de quelques dizaines de millivolts, les différences de potentiel "de jonction" atteignent le plus souvent plusieurs centaines de millivolts. Actuellement, ces différences de potentiel "de jonction" peuvent être ramenées à quelques centaines de millivolts en utilisant une électrode argentée, et à environ cinquante millivolts avec une électrode d'argent chloruré. Cette dernière valeur est suffisamment faible pour permettre une mesure relativement précise, mais l'électrode d'argent chloruré est obtenue par un dépôt fin de chlorure qui présente une mauvaise tenue dans le temps. De plus, une telle électrode est d'un coût incompatible avec une utilisation en milieu scolaire.

Pour éviter l'apparition de ces différences de potentiel "de jonction" élevées, ou du moins pour en diminuer l'importance, sans secourir à une électrode d'argent chloruré, on utilise habituellement des "ponts d'agar" formés par un tube de verre coudé rempli à chaud d'une solution d'agar-agar préalablement saturée en chlorure de potassium. L'une des extrémités du tube est plongée dans la solution à mesurer, tandis que l'autre extrémité est plongée dans une solution de chlorure de potassium saturée dont on mesure le potentiel au moyen d'une électrode d'argent chlorurée. Avec cette méthode de mesure indirecte, on parvient à réduire les potentiels "de jonction" à quelques dizaines de millivolts, ce qui permet d'effectuer des mesures suffisamment précises. Toutefois, la méthode s'avère très coûteuse et délicate à mettre en oeuvre.

On connaît par ailleurs, des documents WO-A-93 04360 et EP-A-0 313 657, des électrodes comportant une âme conductrice métallique enveloppée d'une gaine tubulaire isolante qui se prolonge, au-delà de l'extrémité de cette âme, sur une portion délimitant un espace intérieur rempli d'une pâte ou gélatine conductrice. L'âme métallique de l'électrode n'est en contact qu'avec la pâte ou gélatine conductrice et est isolée de la solution mesurée. On évite ainsi l'apparition de potentiels "de jonction" élevés. Du point de vue de l'utilisation, l'électrode ainsi formée offre les mêmes commodités qu'une électrode classique puisqu'il suffit de la plonger dans la solution mesurée et de relier l'âme métallique au dispositif de mesure pour obtenir une mesure du potentiel de la solution.

Le but de l'invention est de concevoir une électrode de ce type qui soit simple et peu coûteuse, de façon à être notamment adaptée à une utilisation en milieu scolaire.

Selon l'invention, l'âme métallique conductrice est conformée en un téton d'enfichage sur lequel la gaine tubulaire isolante est emmanchée de manière amovible pour former, avec la pâte ou gélatine qu'elle contient, un embout consommable. On obtient ainsi une électrode dont l'embout est consommable et peut être remplacé facilement à l'issue de chaque mesure.

De préférence, la gaine isolante est réalisée en polyéthylène, verre ou céramique, translucide, et la pâte ou gélatine conductrice comporte une gelée de chlorure de potassium ou de sodium.

L'invention a également pour objet un embout comportant une gaine tubulaire isolante dimensionnée pour pouvoir être emmanchée sur l'âme conductrice de l'électrode, et remplie sur toute sa longueur d'une pâte ou gélatine conductrice. Il suffit alors d'équiper une fiche classique de cet embout pour obtenir une électrode du type précité.

L'invention a enfin pour objet un procédé d'obtention de l'électrode précitée, à partir d'une fiche comprenant un téton raccordé à un fil conducteur pour sa liaison au dispositif de mesure, comportant les étapes suivantes:
- on monte sur la fiche un embout constitué par une gaine tubulaire isolante remplie sur toute sa longueur d'une pâte ou gélatine conductrice, en emmanchant ladite gaine sur le téton de la fiche ;
- on enlève le surplus de pâte ou gélatine conductrice qui a été chassé par le téton lors de l'emmanchement de la gaine tubulaire.

De préférence alors, on obture sur une portion de la course d'emmanchement l'extrémité libre de la gaine tubulaire isolante opposée à l'extrémité servant à l'emmanchement de cette gaine.

D'autres caractéristiques et avantages de l'invention ressortiront de la description qui suit d'un mode de réalisation particulier et non limitatif. Il sera fait référence aux figures en annexe, parmi lesquelles :
- la figure 1 est une vue en coupe par un plan axial d'une électrode conforme à l'invention ;
- la figure 2 est une vue analogue de la figure 1, représentant une fiche et un embout consommable prêt à être emmanché sur la fiche pour former l'électrode de la figure 1;
- la figure 3 est une vue en perspective illustrant un montage d'expérimentation mettant en oeuvre un dispositif de mesure d'une différence de potentiel transmembranaire utilisant des électrodes conforme à l'invention.

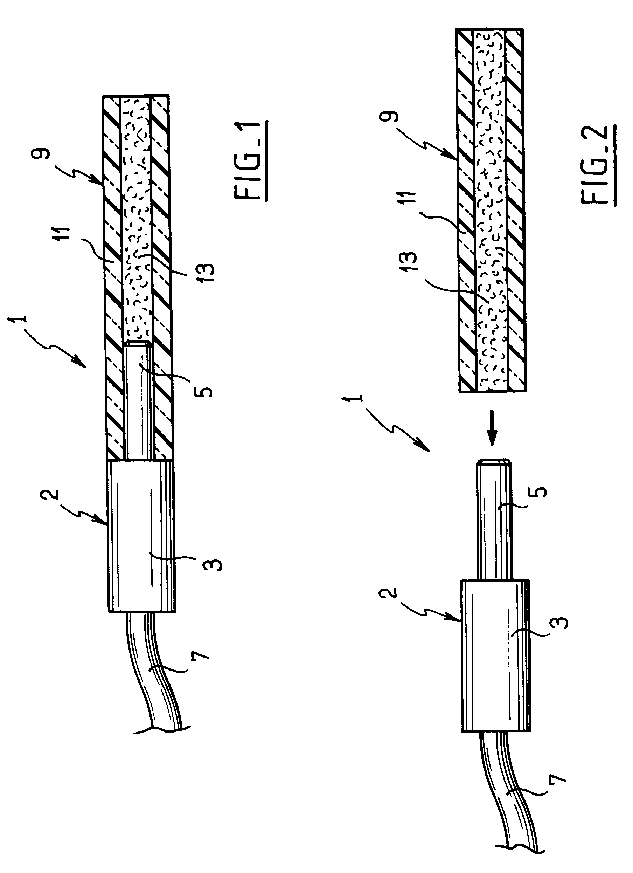

A la figure 1, on a représenté une électrode 1 conforme à l'invention. Cette électrode comporte une fiche 2 constituée d'un corps isolant 3 sur lequel est rigidement fixé un téton d'enfichage 5 en métal conducteur raccordé à un fil conducteur 7 pour sa liaison à un dispositif de mesure (non représenté à la figure 1). Le téton 5 est enveloppé sur toute sa longueur par une gaine tubulaire isolante 11 qui se prolonge, au-delà de l'extrémité de ce téton, sur une portion délimitant un espace intérieur rempli d'une pâte ou gélatine conductrice 13.

Cette gaine isolante 11 peut être réalisée en matière plastique telle que du polyéthylène translucide permettant de mieux distinguer l'intérieur de la gaine, ou encore en verre ou en céramique, et l'on pourra utiliser comme pâte ou gélatine conductrice 13 une gelée saturée en chlorure de potassium ou de sodium. Le téton 5, qui forme une âme de métal conducteur directement au contact de la gélatine 13, est réalisé de préférence en laiton nickelé doré, matériau qui présente une bonne conductivité et une durée de vie élevée. Mais il est également possible d'utiliser d'autres matériaux métalliques, comme par exemple de l'argent.

Conformément à la figure 2, l'électrode représentée ici se présente en deux parties, comprenant d'une part la fiche 2 qui peut être de type classique et disponible dans le commerce, avec son corps isolant 3, son téton 5 et son fil conducteur 7, et d'autre part un embout consommable 9 qui est constitué par la gaine tubulaire 11 encore remplie sur toute sa longueur de la pâte ou gélatine 13, gaine dont le dimensionnement est choisi pour permettre son emmanchement légèrement forcé sur le téton 5.

Pour obtenir l'électrode 1 à partir de la fiche 2 et de l'embout consommable 9, on procède de la manière suivante. L'embout consommable 9 est rapporté sur la fiche 2 par emmanchement de la gaine tubulaire 9 sur le téton 5. Le téton 5 agit alors sur la pâte ou gélatine 13 à la manière d'un piston, et chasse une partie de celle-ci à l'extérieur de la gaine tubulaire 11. L'excès correspondant de gélatine 13 qui s'échappe par l'extrémité de la gaine 11 opposée à la fiche 2 est enlevé au moyen d'un chiffon ou d'une raclette. Ce mode opératoire permet en particulier de garantir un contact optimum entre la pâte ou gélatine 13 et le téton 5. Pour améliorer encore ce contact, on pourra au besoin boucher, par exemple avec le doigt, l'extrémité de la gaine 11 opposée à la fiche 2 lors de l'introduction du téton 5 à l'intérieur de cette gaine, sur une portion de la course d'emmanchement, de sorte que la pâte ou gélatine 13 est légèrement comprimée à l'intérieur de la gaine 11 contre l'extrémité du téton 5. Par ailleurs, pour augmenter la surface de contact entre la pâte ou gélatine 13 et le téton 5, on pourra réaliser un téton 5 de section non circulaire ou circulaire avec des cannelures axiales, de manière à faire pénétrer la pâte ou gélatine 13 entre le contour extérieur du téton 5 et la face intérieure de la gaine tubulaire 11. Inversement, on pourra conserver un téton 5 de section circulaire et réaliser une gaine 11 dont la face intérieure soit de section non circulaire pour obtenir le même résultat de fluage de la pâte ou gélatine 13 dans les espaces interstitiels situés entre le téton 5 et la gaine 11. En particulier, on pourra réaliser des sections de forme ovale, carrée, rectangulaire, étoilée, etc. Après chaque usage, l'embout consommable 9 est retiré de la fiche 2 par simple traction pour être jeté. La fiche 2 est nettoyée et peut recevoir un nouvel embout consommable 9 pour effectuer de nouvelles mesures.

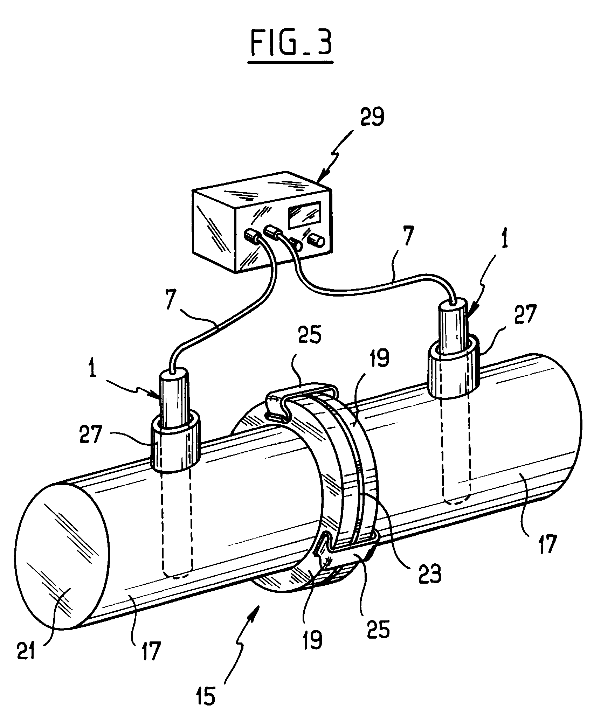

La figure 3 illustre, à titre d'exemple d'utilisation de l'électrode définie ci-dessus, un montage expérimental à caractère pédagogique permettant d'effectuer des mesures de différences de potentiel transmembranaires, c'est-à-dire de mesurer les différences de potentiel entre deux solutions séparées par une membrane. On distingue ainsi une cuve 15 formée par deux demi-cuves cylindriques identiques 17 possédant chacune, à une de leurs extrémités, une collerette radiale de raccordement 19 et obturée à leur autre extrémité par un fond 21. Les deux demi-cuves 17 sont raccordées l'une à l'autre en disposant en regard l'une de l'autre les collerettes 19 avec, entre les deux collerettes, une membrane 23 semi-perméable ou biologique que l'on souhaite tester, et en bridant les deux collerettes 19 l'une contre l'autre au moyen de pattes élastiques 25 formant des étriers. Chaque demi-cuve 17 possède en outre un orifice d'accès bordé par un manchon 27 qui s'étend en saillie de la face extérieure de la demi-cuve 17.

Chaque demi-cuve 17 est remplie d'une solution aqueuse, et l'on introduit, par chaque manchon 27, une électrode telle que 1 de telle sorte que l'embout de l'électrode est plongé à l'intérieur de la solution aqueuse. Les deux électrodes ainsi mises en place sont identiques et sont raccordées par les fils conducteurs 7 aux bornes d'un dispositif de mesure adapté 29 qui est connu en lui-même et qui ne sera pas davantage décrit. Chaque électrode 1 relève ainsi le potentiel de la solution aqueuse dans laquelle elle est plongée de part et d'autre de la membrane 23 et le dispositif de mesure 29 fournit une indication de la différence de potentiel correspondante.

L'invention n'est pas limitée au mode de réalisation qui vient d'être décrit, mais englobe au contraire toute variante reprenant, avec des moyens équivalents, ses caractéristiques essentielles. Par exemple, l'âme métallique conductrice peut éventuellement être constituée de la manière la plus simple par l'extrémité dénudée du fil conducteur noyée dans la pâte ou gélatine.

Enfin, l'invention n'est pas limitée à l'application expérimentale décrite ci-dessus, mais pourra être utilisée pour toute autre mesure de petits potentiels dans une solution aqueuse nécessitant une élimination (ou une réduction optimum) du potentiel "de jonction".

## Revendications

1. Electrode pour dispositif de mesure de petits potentiels dans une solution aqueuse, comportant une âme conductrice métallique (5) enveloppée d'une gaine tubulaire isolante (11) qui se prolonge, au-delà de l'extrémité de cette âme, sur une portion délimitant un espace intérieur rempli d'une pâte ou gélatine conductrice (13), caractérisée en ce que l'âme métallique conductrice (5) est conformée en un téton d'enfichage (5) sur lequel la gaine tubulaire isolante (11) est emmanchée de manière amovible pour former, avec la pâte ou gélatine conductrice (13) qu'elle contient, un embout consommable (9).

2. Electrode selon la revendication 1, caractérisée en ce que la gaine isolante (11) est réalisée en polyéthylène, verre ou céramique.

3. Electrode selon la revendication 1 ou la revendication 2, caractérisée en ce que la gaine isolante (11) est translucide.

4. Electrode selon l'une des revendications précédentes, caractérisée en ce que la pâte ou gélatine conductrice (13) comporte une gelée de chlorure de potassium ou de sodium.

5. Embout servant à réaliser une électrode selon l'une des revendications 1 à 4, caractérisé en ce qu'il comporte une gaine tubulaire isolante (11) dimensionnée pour pouvoir être emmanchée sur l'âme conductrice de l'électrode, et remplie sur toute sa longueur d'une pâte ou gélatine conductrice (13).

6. Embout selon la revendication 5, caractérisé en ce que la gaine isolante (11) est réalisée en polyéthylène, verre ou céramique, en étant de préférence translucide.

7. Embout selon la revendication 5 ou la revendication 6, caractérisé en ce que la pâte ou gélatine conductrice (13) comporte une gelée de chlorure de potassium ou de sodium.

8. Procédé d'obtention d'une électrode selon l'une des revendications 1 à 4, à partir d'une fiche (2) comprenant un téton (5) raccordé à un fil conducteur (7) pour sa liaison au dispositif de mesure, caractérisé par le fait qu'il comporte les étapes suivantes :
- on monte sur la fiche (2) un embout (9) constitué par une gaine tubulaire isolante (11) remplie sur toute sa longueur d'une pâte ou gélatine conductrice, en emmanchant ladite gaine sur le téton (5) de la fiche ;
- on enlève le surplus de pâte ou gélatine conductrice (13) qui a été chassé par le téton (5) lors de l'emmanchement de la gaine tubulaire (11).

9. Procédé selon la revendication 8, caractérisé en ce qu'on obture sur une portion de la course d'emmanchement l'extrémité libre de la gaine tubulaire isolante (11) opposée à l'extrémité servant à l'emmanchement de cette gaine.
